(19) Europäisches Patentamt
European Patent Office
Office européen des brevets

(11) **EP 1 907 679 B1**

(12) **FASCICULE DE BREVET EUROPEEN**

(45) Date de publication et mention
de la délivrance du brevet:
**28.01.2009 Bulletin 2009/05**

(51) Int Cl.:
*F02D 35/02* *(2006.01)*    *G01M 15/08* *(2006.01)*

(21) Numéro de dépôt: **06778961.0**

(86) Numéro de dépôt international:
**PCT/FR2006/050616**

(22) Date de dépôt: **21.06.2006**

(87) Numéro de publication internationale:
**WO 2007/006988 (18.01.2007 Gazette 2007/03)**

(54) **DISPOSITIF ET PROCEDE DE TRAITEMENT D'UN SIGNAL DE MESURE DE PRESSION D'UNE CHAMBRE DE COMBUSTION D'UN MOTEUR A COMBUSTION INTERNE**

VORRICHTUNG UND VERFAHREN ZUM VERARBEITEN EINES SIGNALS einer BrennkammerDRUCKMESSUNG  EINER BrENNkraftmaschine

DEVICE AND METHOD FOR PROCESSING A SIGNAL OF a combustion chamber PRESSURE MEASUREMENT OF AN INTERNAL COMBUSTION ENGINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.07.2005 FR 0507264**

(43) Date de publication de la demande:
**09.04.2008 Bulletin 2008/15**

(73) Titulaire: **Renault SAS**
**92100 Boulogne Billancourt (FR)**

(72) Inventeurs:
• **CORDESSES, Lionel**
**78180 Montigny-le-Bretonneux (FR)**
• **MARSILIA, Marco**
**92100 Boulogne-Billancourt (FR)**

(74) Mandataire: **Guyon, Rodolphe C.**
**Renault Technocentre**
**Service 0267**
**TCR GRA 236**
**1, Avenue du Golf**
**78288 Guyancourt Cedex (FR)**

(56) Documents cités:
EP-A- 1 132 605          FR-A- 2 765 275
US-A- 5 109 820          US-A1- 2003 010 101
US-A1- 2003 145 829

## Description

La présente invention concerne un dispositif de traitement d'un signal de mesure de pression d'une chambre de combustion d'un moteur à combustion interne, en vue de la détermination d'un instant de début de combustion. Elle concerne également un procédé mis en oeuvre par ce dispositif.

Un tel dispositif fait l'objet de la demande de brevet américain publiée sous le numéro US 2003/0145829. Dans ce document, le signal de mesure de pression est traité à l'aide d'une transformée en ondelettes. Une analyse des coefficients de la transformée en ondelettes du signal de mesure de pression permet de détecter un instant de début de combustion. Plus précisément, une augmentation soudaine des valeurs absolues de ces coefficients constitue un indicateur de l'instant de début de combustion.

Ce traitement du signal de mesure de pression, assez consommateur en temps de calcul, est coûteux et difficilement implantable dans un calculateur de contrôle moteur classique.

L'invention vise à remédier à cet inconvénient en fournissant un dispositif capable de déterminer un instant de début de combustion à l'aide d'un traitement simple du signal de mesure de pression.

L'invention a donc pour objet un dispositif de traitement d'un signal de mesure de pression d'une chambre de combustion d'un moteur à combustion interne, en vue de la détermination d'un instant de début de combustion, caractérisé en ce qu'il comprend:

- un filtre passe-bas du signal de mesure de pression de manière à obtenir un signal filtré et des moyens de soustraction du signal filtré au signal de mesure de pression pour obtenir un signal de différence,
- des moyens de comparaison du signal de différence à une valeur seuil prédéterminée, et
- des moyens de détermination de l'instant de début de combustion en tant qu'instant auquel le signal de différence atteint la valeur seuil prédéterminée.

En effet, le traitement réalisé sur le signal de mesure de pression est simple puisqu'il s'agit d'un filtrage passe-bas et la simple comparaison de la différence entre le signal filtré et le signal d'origine avec une valeur seuil prédéterminée permet de déterminer de façon fiable l'instant du début de combustion.

Dans un mode de réalisation possible de l'invention, le filtre passe-bas comporte des moyens numériques de filtrage passe-bas de premier ordre et les moyens de comparaison comportent un comparateur numérique.

Une implémentation numérique de l'invention est possible puisque les traitements réalisés sur le signal de mesure de pression sont simples. Les calculateurs de contrôle moteur classiques sont capables de supporter de tels traitements. En outre, l'intérêt d'une implémentation numérique est qu'elle permet d'obtenir des résultats fiables et prévisibles par simulation. De plus, le réglage des paramètres du dispositif est simple.

De façon optionnelle, les paramètres numériques du filtre passe-bas et les moyens de comparaison sont choisis de manière à générer uniquement des opérations entre nombres entiers lors du traitement du signal de mesure de pression.

De façon optionnelle également, les paramètres numériques du filtre passe-bas et les moyens de comparaison sont choisis de manière à remplacer toute division d'un nombre entier par un décalage à droite de sa représentation binaire, lors du traitement du signal de mesure de pression.

Ainsi, les opérations numériques sont facilitées et le traitement en est d'autant simplifié.

Dans ce mode de réalisation également, le filtre passe-bas peut comporter un intégrateur numérique d'Euler. Un tel intégrateur numérique est simple à mettre en oeuvre.

De façon avantageuse, le dispositif de traitement d'un signal de mesure de pression comporte un élément de traitement non linéaire disposé de manière à augmenter la bande passante du filtre passe-bas lorsque le signal de différence atteint la valeur seuil prédéterminée.

De cette façon, il est possible de détecter un éventuel second instant de début de combustion, après la détection d'un premier instant de début de combustion.

Dans un autre mode de réalisation possible de l'invention, le filtre passe-bas comporte des moyens analogiques de filtrage passe-bas de premier ordre, et l'élément de traitement non linéaire comporte une diode disposée en parallèle du filtre passe-bas.

L'avantage d'un tel mode de réalisation analogique est son coût.

Dans ce mode de réalisation, le dispositif de traitement d'un signal de mesure de pression peut comporter un circuit analogique de type comparateur pour la fourniture d'un signal échelon passant d'une valeur nulle à une valeur non nulle lorsque le signal de différence dépasse la valeur seuil prédéterminée.

Ce signal échelon constitue une alarme pouvant déclencher des traitements ultérieurs.

L'invention a également pour objet un procédé de traitement d'un signal de mesure de pression d'une chambre de combustion d'un moteur à combustion interne, en vue de la détermination d'un instant de début de combustion, caractérisé en ce qu'il comprend les étapes suivantes :

- filtrage passe-bas du signal de mesure de pression de manière à obtenir un signal filtré et soustraction du signal filtré au signal de mesure de pression pour obtenir un signal de différence,
- comparaison du signal de différence à une valeur seuil prédéterminée,
- détermination de l'instant de début de combustion en tant qu'instant auquel le signal de différence atteint la valeur seuil prédéterminée.

De façon avantageuse, la bande passante du filtrage passe-bas est augmentée lorsque le signal de différence atteint la valeur seuil prédéterminée.

Ceci permet, comme indiqué précédemment, de détecter un second instant de début de combustion, après la détection d'un premier instant de début de combustion.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de traitement d'un signal de mesure de pression selon l'invention ;
- les figures 2a et 2b sont des diagrammes représentant l'évolution au cours du temps d'un signal de mesure de pression dans une chambre de combustion d'un moteur à combustion interne ;
- la figure 3 représente schématiquement la structure du dispositif de la figure 1 selon un mode de réalisation analogique possible ; et
- la figure 4 représente schématiquement une chambre de combustion munie d'un dispositif selon l'invention.

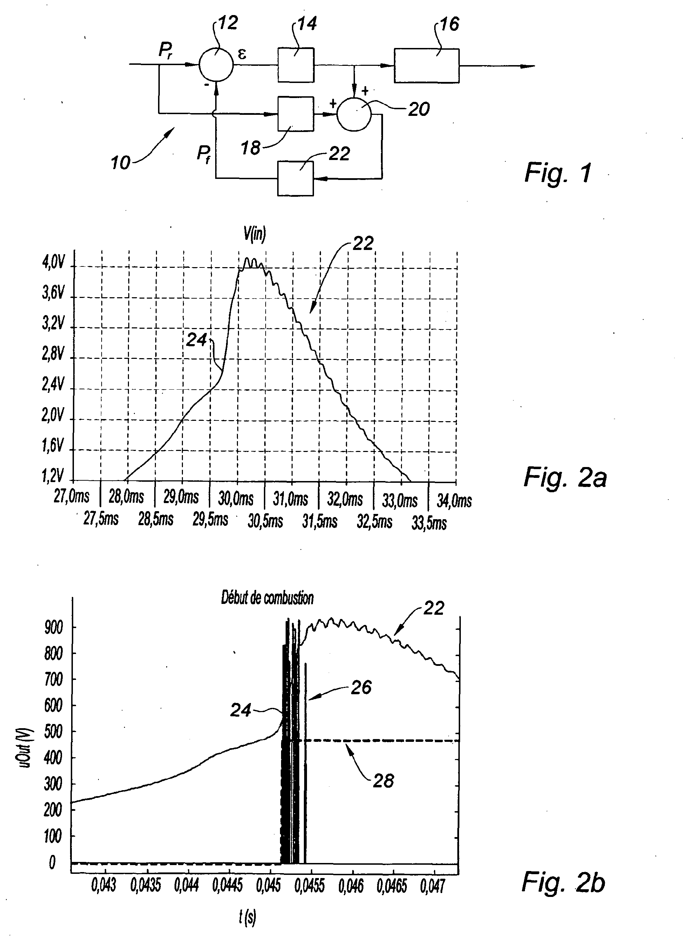

Le dispositif 10 représenté sur la figure 1 est adapté pour recevoir en entrée un signal Pr de mesure de pression d'une chambre de combustion d'un moteur à combustion interne.

Ce dispositif 10 comporte un soustracteur 12 pour obtenir, à partir du signal Pr de mesure de pression et d'un signal filtré Pf, un premier signal de différence ε entre ces deux signaux.

De façon optionnelle, il comporte en outre un élément 14 de traitement non linéaire du premier signal de différence ε, qui sera détaillé par la suite, pour fournir un second signal de différence.

Ce second signal de différence, ou à défaut d'élément 14 le premier signal de différence, est fourni à un dispositif 16 de détection d'un instant de début de combustion. Ce dispositif 16 comporte des moyens de comparaison du second signal de différence à une valeur seuil prédéterminée σ, et des moyens de détermination de l'instant de début de combustion en tant qu'instant auquel le second signal de différence atteint la valeur seuil prédéterminée.

Le signal filtré Pf est obtenu à partir du signal de mesure de pression Pr à l'aide d'un dispositif de filtrage passe-bas comportant les éléments suivants :

- un amplificateur 18 appliqué au signal de mesure de pression Pr, de gain $F = k_f$ permettant de régler indirectement la pulsation de coupure du filtrage passe-bas devant être opéré sur le signal de mesure de pression Pr;
- un additionneur 20, pour ajouter au signal Pr amplifié par l'amplificateur 18, le résultat du traitement réalisé par l'élément de traitement non linéaire 14, de manière à amplifier le signal Pr de sorte que la bande passante du filtrage passe-bas soit augmentée lorsque le second signal de différence atteint la valeur seuil prédéterminée σ ; et
- un filtre passe-bas 22 dont les paramètres sont prédéterminés, recevant en entrée le signal de sortie de l'additionneur 20 et fournissant en sortie le signal filtré Pf fourni en entrée du soustracteur 12.

Dans un mode de réalisation possible de l'invention, le dispositif 10 tel que décrit précédemment est réalisé à l'aide d'éléments numériques.

Notamment, le filtre passe-bas 22 peut comporter des moyens numériques de filtrage passe-bas de premier ordre, par exemple un intégrateur numérique d'Euler réalisant l'opération suivante :

$$G(z) = \frac{Te}{z-1}, \qquad (1)$$

avec Te, la fréquence d'échantillonnage, $z = e^{i2\pi fTe}$ l'opérateur de la transformée en z, et f la fréquence.

Par exemple également, les moyens de comparaison comportent un comparateur numérique. Les paramètres numériques du filtre passe-bas et des moyens de comparaison peuvent être choisis de manière à générer uniquement des opérations entre nombres entiers et/ou de manière à remplacer toute division d'un nombre entier par un décalage à droite de sa représentation binaire, lors du traitement du signal de mesure de pression.

L'élément de traitement non linéaire 14 réalise une opération définie par exemple par le système d'équations

suivant :

$$NL(x) = m \cdot x \quad si \ x \geq \sigma$$
$$NL(x) = 0 \qquad si \ x < \sigma \qquad (2)$$

Ainsi, la bande passante du filtre passe-bas numérique 22 dépend du coefficient $k_f$ d'amplification de l'amplificateur 18 et de la sortie de l'élément de traitement non linéaire 14, de telle sorte que, lorsque la sortie de l'élément de traitement non linéaire 14 est nulle, c'est-à-dire lorsque le premier signal de différence $\varepsilon$ est inférieur au seuil $\sigma$ prédéterminé, la pulsation de coupure à -3 dB $\omega_{c1}$ du filtre passe-bas 22 est donnée par l'équation suivante :

$$\omega_{c1} = \frac{1}{Te} \cdot \arccos\left| \frac{k_f^{\ 2} + 2k_f - 2}{2(k_f - 1)} \right| . \qquad (3)$$

En revanche, lorsque la sortie de l'élément non linéaire 14 est non nulle, c'est-à-dire lorsqu'elle amplifie le signal de différence d'un facteur m, la pulsation de coupure à -3dB $\omega_{c2}$ du filtre passe-bas 22 est donnée par l'équation suivante :

$$\omega_{c2} = \frac{1}{Te} \cdot \arccos\left| \frac{(m + k_f)^2 + 2(m + k_f) - 2}{2(m + k_f - 1)} \right| . \qquad (4)$$

La valeur de seuil $\sigma$ est choisie de telle sorte qu'elle soit dépassée par le premier signal de différence $\varepsilon$ à l'instant de début de combustion.

Lorsque l'on détecte cet instant de début de combustion, l'élément de traitement non linéaire 14 provoque l'augmentation de la bande passante du filtre passe-bas 22, de sorte que le premier signal de différence $\varepsilon$, résultat de la soustraction du signal de mesure de pression Pr et du signal filtré Pf est fortement réduit. Ainsi, il est possible de détecter un second instant de début de combustion en tant qu'instant auquel le premier signal de différence $\varepsilon$ atteint de nouveau la valeur seuil prédéterminée $\sigma$.

Sur la figure 2a, la courbe 22 représente l'évolution au cours du temps du signal de mesure de pression Pr dans la chambre de combustion du moteur à combustion interne. On remarque que l'instant de début de combustion correspond au premier instant auquel le signal de mesure de pression augmente brutalement, au point 24.

La figure 2b représente un détail de la courbe 22, autour du point 24. La courbe 26 correspond à l'évolution au cours du temps du premier signal de différence $\varepsilon$ qui dépasse la valeur seuil prédéterminée $\sigma$ pour la première fois au point 24. Enfin, la courbe 28 représente un signal échelon fourni en sortie du dispositif de traitement qui prend une valeur non nulle lorsque l'instant de début de combustion est détecté.

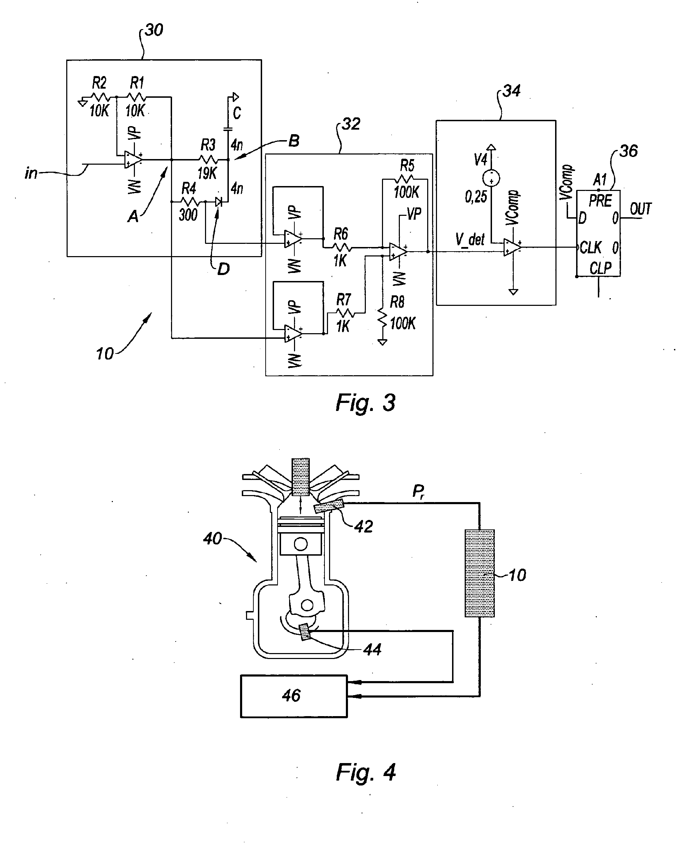

Dans un autre mode de réalisation possible de l'invention représenté sur la figure 3, le dispositif de traitement 10 est réalisé à l'aide d'éléments analogiques.

Le montage représenté sur cette figure comporte un premier étage d'entrée 30 dans lequel la tension $V_A$ en un point A est liée à la tension d'entrée $V_{in}$ du signal de mesure de pression par la relation suivante :

$$\frac{V_A}{V_{in}} = 1 + \frac{R_1}{R_2} = A_v , \qquad (5)$$

où $R_1$ et $R_2$ sont deux valeurs de résistances.

Entre le point A et un point B, le premier étage d'entrée 30 comporte un circuit comprenant une diode D disposée en parallèle d'un filtre passe-bas du premier ordre (comportant une résistance $R_3$ associée à une capacité C). Ce circuit constitue un élément de traitement non linéaire. En effet, lorsque la diode D est bloquée, la tension $V_B$ au point B est donnée par la relation suivante :

$$V_B = \frac{1}{1+sCR_3}V_A = A_v V_{in}\frac{1}{1+sCR_3} = A_v V_{filtré} \, , \qquad (6)$$

où s est l'opérateur de Laplace et $V_{filtré}$ la tension du signal filtré Pf.

Le signal d'entrée peut donc être considéré comme ayant été amplifié puis filtré par un filtre passe-bas du premier ordre dont la pulsation de coupure à -3dB $\omega_{c1}$ est donnée par l'équation suivante :

$$\omega_{c1} = \frac{1}{CR_3} . \qquad (7)$$

Si l'on note σ la tension de seuil de la diode D, celle-ci reste bloquée tant que $V_A$-$V_B$ est inférieur à σ.

Or, $V_A$-$V_B$=$A_v$ ($V_{in}$-$V_{filtré}$) = $A_v\varepsilon$, représente l'erreur entre le signal d'entrée $V_{in}$ et le signal filtré passe-bas $V_{filtré}$.

La diode D est alors bloquée tant que la valeur de est inférieure à un seuil prédéterminé et elle devient passante lorsque l'erreur ε dépasse cette valeur prédéterminée.

Lorsque la diode devient passante, la bande passante du filtre passe-bas est augmentée par la présence d'une résistance $R_4$ en entrée de la diode et en parallèle avec la résistance $R_3$ (si l'on néglige la chute de tension aux bornes de la diode).

La diode se comporte donc comme un élément de traitement non linéaire ayant pour fonction lorsque la diode est passante d'augmenter la bande passante du filtrage passe-bas.

La tension de seuil σ de la diode D est choisie de sorte que l'instant où la tension aux bornes de la diode dépasse cette tension de seuil pour la première fois correspond à l'instant de début de combustion (instant où se produit la montée haute fréquence de grande amplitude du signal de mesure de pression).

A l'aide du gain $A_v$ donné par l'équation (5), on peut modifier la valeur du seuil σ. Cela permet de régler aisément le dispositif de traitement et de le rendre par conséquent très flexible et utilisable pour tout type de combustion.

Si l'on note $I_D$ le courant qui traverse la diode D, la tension aux bornes de $R_4$ est proportionnelle à ce courant :

$$V_{R4} = R_4 I_D . \qquad (8)$$

Compte tenu des considérations faites précédemment, l'instant de début de combustion correspond également à l'instant où la tension $V_{R4}$ dépasse une certaine valeur de seuil $s_v$. La tension $V_{R4}$ aux bornes de $R_4$ est donc mesurée et amplifiée par un amplificateur différentiel dans un deuxième étage 32 du montage de la figure 3.

Si l'on note G le gain de cet amplificateur différentiel, la tension en sortie du deuxième étage 32 est alors donnée par l'équation suivante :

$$V_{det} = G \cdot V_{R4} . \qquad (9)$$

Cette tension Vdet est ensuite comparée à la valeur seuil $S_v = G \cdot s_v$ par un comparateur analogique dans un troisième étage 34 du montage de la figure 3.

Enfin, le signal fourni en sortie du troisième étage 34 constitue l'entrée « Clock » d'une bascule analogique 36 dont l'entrée D est constamment mise à la valeur logique « 1 ». Cette bascule doit être remise à zéro à la fin de chaque cycle thermodynamique du moteur.

Le signal de sortie de la bascule analogique 36 est un signal échelon dont le front montant correspond à l'instant de début de combustion dans le cycle thermodynamique : il correspond au signal 28 représenté sur la figure 2b.

Enfin la figure 4 représente une chambre de combustion 40 d'un moteur à combustion interne. Cette chambre de combustion est associée à un dispositif de traitement 10 tel que décrit précédemment, recevant en entrée un signal de mesure de pression Pr fourni par un capteur de pression 42. Les données fournies par le dispositif de traitement 10 et celles fournies par un capteur 44 d'angle de vilebrequin disposé dans la chambre de combustion 40 sont transmises à un boîtier électronique 46 pour des traitements ultérieurs.

Comme indiqué précédemment, le dispositif 10 de traitement du signal de mesure de pression peut être de type analogique ou numérique.

Il apparaît clairement qu'un dispositif de traitement d'un signal de mesure de pression tel que décrit précédemment permet de détecter simplement un ou plusieurs instants de début de combustion d'une chambre de combustion d'un moteur à combustion interne.

On notera que cependant que l'invention n'est pas limitée aux modes de réalisation décrits précédemment.

En effet notamment, en variante, le filtre passe-bas 22, réalisant dans le mode de réalisation numérique une intégration d'Eule, peut être remplacé par un filtre passe-bas réalisant par exemple une intégration trapézoïdale basée sur la fonction de transfert suivante :

$$G(z) = \frac{Te}{2} \cdot \frac{(z+1)}{(z-1)}. \hspace{3cm} (10)$$

**Revendications**

1.  Dispositif (10) de traitement d'un signal de mesure de pression (Pr) d'une chambre de combustion (40) d'un moteur à combustion interne, en vue de la détermination d'un instant de début de combustion, **caractérisé en ce qu'**il comprend:

    - un filtre passe-bas (22) du signal de mesure de pression de manière à obtenir un signal filtré (Pf) et des moyens de soustraction du signal filtré au signal de mesure de pression pour obtenir un signal de différence ($\varepsilon$),
    - des moyens (16) de comparaison du signal de différence à une valeur seuil prédéterminée, et
    - des moyens (16) de détermination de l'instant de début de combustion en tant qu'instant auquel le signal de différence atteint la valeur seuil prédéterminée.

2.  Dispositif (10) de traitement d'un signal de mesure de pression (Pr) selon la revendication 1, comportant un élément (14 ; D) de traitement non linéaire disposé de manière à augmenter la bande passante du filtre passe-bas (22) lorsque le signal de différence atteint la valeur seuil prédéterminée.

3.  Dispositif (10) de traitement d'un signal de mesure de pression (Pr) selon la revendication 1 ou 2, dans lequel le filtre passe-bas (22) comporte des moyens numériques de filtrage passe-bas de premier ordre, et dans lequel les moyens de comparaison (16) comportent un comparateur numérique.

4.  Dispositif (10) de traitement d'un signal de mesure de pression (Pr) selon la revendication 3, dans lequel les paramètres numériques du filtre passe-bas (22) et des moyens de comparaison (16) sont choisis de manière à générer uniquement des opérations entre nombres entiers lors du traitement du signal de mesure de pression.

5.  Dispositif (10) de traitement d'un signal de mesure de pression (Pr) selon la revendication 4, dans lequel les paramètres numériques du filtre passe-bas (22) et des moyens de comparaison (16) sont en outre choisis de manière à remplacer toute division d'un nombre entier par un décalage à droite de sa représentation binaire, lors du traitement du signal de mesure de pression.

6.  Dispositif (10) de traitement d'un signal de mesure de pression (Pr) selon l'une quelconque des revendications 3 à 5, dans lequel le filtre passe-bas (22) comporte un intégrateur numérique d'Euler.

7.  Dispositif (10) de traitement d'un signal de mesure de pression (Pr) selon la revendication 2, dans lequel le filtre passe-bas (22) comporte des moyens analogiques (C, $R_3$, $R_4$) de filtrage passe-bas de premier ordre, et dans lequel l'élément de traitement non linéaire (14) comporte une diode (D) disposée en parallèle du filtre passe-bas.

8.  Dispositif (10) de traitement d'un signal de mesure de pression (Pr) selon la revendication 7, comportant en outre un circuit analogique (32) de type comparateur pour la fourniture d'un signal échelon passant d'une valeur nulle à une valeur non nulle lorsque le signal de différence ($\varepsilon$) dépasse la valeur seuil prédéterminée.

9.  Procédé de traitement d'un signal de mesure de pression (Pr) d'une chambre de combustion (40) d'un moteur à combustion interne, en vue de la détermination d'un instant de début de combustion, **caractérisé en ce qu'**il comprend les étapes suivantes :

- filtrage passe-bas du signal de mesure de pression de manière à obtenir un signal filtré (Pf) et soustraction du signal filtré au signal de mesure de pression pour obtenir un signal de différence ($\varepsilon$),
- comparaison du signal de différence à une valeur seuil prédéterminée,
- détermination de l'instant de début de combustion en tant qu'instant auquel le signal de différence atteint la valeur seuil prédéterminée.

10. Procédé de traitement d'un signal de mesure de pression (Pr) selon la revendication 9, dans lequel la bande passante du filtrage passe-bas est augmentée lorsque le signal de différence atteint la valeur seuil prédéterminée.

**Claims**

1. Device (10) for processing a pressure-measurement signal (Pr) from a combustion chamber (40) of an internal combustion engine, in order to determine a start-of-combustion moment, **characterized in that** it comprises:

   - a low-pass filter (22) of the pressure-measurement signal so as to obtain a filtered signal (Pf) and means for subtracting the filtered signal from the pressure-measurement signal in order to obtain a difference signal ($\varepsilon$) ,
   - means (16) for comparing the difference signal with a predetermined threshold value, and
   - means (16) for determining the start-of-combustion moment as the moment at which the difference signal reaches the predetermined threshold value.

2. Device (10) for processing a pressure-measurement signal (Pr) according to Claim 1, comprising a non-linear processing element (14; D) placed so as to increase the bandwidth of the low-pass filter (22) when the difference signal reaches the predetermined threshold value.

3. Device (10) for processing a pressure-measurement signal (Pr) according to Claim 1 or 2, in which the low-pass filter (22) comprises first order low-pass filtering digital means, and in which the comparison means (16) comprise a digital comparator.

4. Device (10) for processing a pressure-measurement signal (Pr) according to Claim 3, in which the digital parameters of the low-pass filter (22) and of the comparison means (16) are chosen so as to generate only operations between whole numbers when the pressure-measurement signal is processed.

5. Device (10) for processing a pressure-measurement signal (Pr) according to Claim 4, in which the digital parameters of the low-pass filter (22) and of the comparison means (16) are also chosen so as to replace any division of a whole number by a rightwards shift of its binary representation, when the pressure-measurement signal is processed.

6. Device (10) for processing a pressure-measurement signal (Pr) according to any one of Claims 3 to 5, in which the low-pass filter (22) comprises a Euler digital integrator.

7. Device (10) for processing a pressure-measurement signal (Pr) according to Claim 2, in which the low-pass filter (22) comprises first order low-pass filtering analogue means (C, $R_3$, $R_4$) and in which the non-linear processing element (14) comprises a diode (D) placed in parallel with the low-pass filter.

8. Device (10) for processing a pressure-measurement signal (Pr) according to Claim 7, also comprising an analogue circuit (32) of the comparator type in order to provide a step signal passing from a zero value to a non-zero value when the difference signal ($\varepsilon$) exceeds the predetermined threshold value.

9. Method of processing a pressure-measurement signal (Pr) from a combustion chamber (40) of an internal combustion engine, in order to determine a start-of-combustion moment, **characterized in that** it comprises the following steps:

   - low-pass filtering of the pressure-measurement signal in order to obtain a filtered signal (Pf) and subtraction of the filtered signal from the pressure-measurement signal in order to obtain a difference signal ($\varepsilon$),
   - comparison of the difference signal with a predetermined threshold value,
   - determination of the start-of-combustion moment as the moment at which the difference signal reaches the predetermined threshold value.

10. Method of processing a pressure-measurement signal (Pr) according to Claim 9, in which the bandwidth of the low-pass filtering is increased when the difference signal reaches the predetermined threshold value.

**Patentansprüche**

1. Vorrichtung (10) zur Verarbeitung eines Druckmesssignals (Pr) einer Brennkammer (40) eines Verbrennungsmotors zur Bestimmung des Zeitpunkts eines Verbrennungsbeginns, **dadurch gekennzeichnet, dass** sie aufweist:

   - ein Tiefpassfilter (22) des Druckmesssignals, um ein gefiltertes Signal (Pf) zu erhalten, und Mittel zur Subtraktion des gefilterten Signals vom Druckmesssignal, um ein Differenzsignal ($\varepsilon$) zu erhalten,
   - Mittel (16) zum Vergleich des Differenzsignals mit einem vorbestimmten Schwellwert, und
   - Mittel (16) zur Bestimmung des Zeitpunkts des Verbrennungsbeginns als der Zeitpunkt, in dem das Differenzsignal den vorbestimmten Schwellwert erreicht.

2. Vorrichtung (10) zur Verarbeitung eines Druckmesssignals (Pr) nach Anspruch 1, die ein Element (14; D) zur nichtlinearen Verarbeitung aufweist, das so angeordnet ist, dass es die Bandbreite des Tiefpassfilters (22) erhöht, wenn das Differenzsignal den vorbestimmten Schwellwert erreicht.

3. Vorrichtung (10) zur Verarbeitung eines Druckmesssignals (Pr) nach Anspruch 1 oder 2, bei der das Tiefpassfilter (22) digitale Mittel zur Tiefpassfilterung erster Ordnung aufweist, und bei der die Vergleichsmittel (16) einen digitalen Komparator aufweisen.

4. Vorrichtung (10) zur Verarbeitung eines Druckmesssignals (Pr) nach Anspruch 3, bei der die digitalen Parameter des Tiefpassfilters (22) und der Vergleichsmittel (16) so gewählt werden, dass bei der Verarbeitung des Druckmesssignals nur Operationen zwischen ganzen Zahlen erzeugt werden.

5. Vorrichtung (10) zur Verarbeitung eines Druckmesssignals (Pr) nach Anspruch 4, bei der die digitalen Parameter des Tiefpassfilters (22) und der Vergleichsmittel (16) außerdem so gewählt werden, dass bei der Verarbeitung des Druckmesssignals jede Division einer ganzen Zahl durch eine Verschiebung ihrer binären Darstellung nach rechts ersetzt wird.

6. Vorrichtung (10) zur Verarbeitung eines Druckmesssignals (Pr) nach einem der Ansprüche 3 bis 5, bei der das Tiefpassfilter (22) einen digitalen Euler-Integrator aufweist.

7. Vorrichtung (10) zur Verarbeitung eines Druckmesssignals (Pr) nach Anspruch 2, bei der das Tiefpassfilter (22) analoge Tiefpassfiltermittel (C, $R_3$, $R_4$) erster Ordnung aufweist, und bei der das Element zur nicht-linearen Verarbeitung (14) eine Diode (D) aufweist, die parallel zum Tiefpassfilter angeordnet ist.

8. Vorrichtung (10) zur Verarbeitung eines Druckmesssignals (Pr) nach Anspruch 7, die außerdem eine analoge Schaltung (32) vom Typ Komparator zum Liefern eines Stufensignals aufweist, das von einem Wert Null auf einen Wert ungleich Null geht, wenn das Differenzsignal ($\varepsilon$) den vorbestimmten Schwellwert überschreitet.

9. Verfahren zur Verarbeitung eines Druckmesssignals (Pr) einer Brennkammer (40) eines Verbrennungsmotors zur Bestimmung des Zeitpunkts eines Verbrennungsbeginns, **dadurch gekennzeichnet, dass** es die folgenden Schritte aufweist:

   - Tiefpassfilterung des Druckmesssignals, um ein gefiltertes Signal (Pf) zu erhalten, und Subtraktion des gefilterten Signals vom Druckmesssignal, um ein Differenzsignal ($\varepsilon$) zu erhalten,
   - Vergleich des Differenzsignals mit einem vorbestimmten Schwellwert,
   - Bestimmung des Zeitpunkts des Verbrennungsbeginns als der Zeitpunkt, in dem das Differenzsignal den vorbestimmten Schwellwert erreicht.

10. Verfahren zur Verarbeitung eines Druckmesssignals (Pr) nach Anspruch 9, bei dem die Bandbreite der Tiefpassfilterung erhöht wird, wenn das Differenzsignal den vorbestimmten Schwellwert erreicht.

Fig. 1

V(in)

Fig. 2a

Début de combustion

Fig. 2b

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030145829 A